# EUROPEAN PATENT SPECIFICATION

(11) **EP 2 487 083 B1**
(45) Date of publication and mention of the grant of the patent: **25.04.2018**
(21) Application number: 10821744.9
(22) Date of filing: 06.10.2010
(51) Int. Cl.: B60T 11/22, B60T 11/16, B60T 13/14, B60T 17/06

(54) **RESERVOIR TANK CONNECTION CONNECTOR, MASTER CYLINDER PROVIDED WITH THIS CONNECTOR, AND BRAKING DEVICE PROVIDED WITH THIS MASTER CYLINDER**
STECKER ZUM ANSCHLUSS EINES SPEICHERTANKS, MIT DIESEM STECKER AUSGESTATTETER MASTERZYLINDER SOWIE MIT DIESEM MASTERZYLINDER AUSGESTATTETE BREMSVORRICHTUNG
RACCORD DE RACCORDEMENT A UNE CUVE DE RESERVOIR, MAITRE-CYLINDRE COMPORTANT CE RACCORD ET DISPOSITIF DE FREINAGE COMPORTANT CE MAITRE-CYLINDRE

(30) Priority: 08.10.2009 JP 2009234298
(43) Date of publication of application: 15.08.2012
(73) Proprietor: Robert Bosch GmbH, 70469 Stuttgart (DE)
(72) Inventor: TAKAHASHI, Toshiyuki, Hiki-gun Saitama 355-0813 (JP)
(74) Representative: DREISS Patentanwälte PartG mbB
(86) International application number: PCT/JP2010/005988
(87) International publication number: WO 2011/043069

(56) References cited:
- EP-A1- 1 447 294
- DE-A1- 10 112 637
- FR-A1- 2 844 333
- FR-A1- 2 861 356
- JP-A- 2005 219 561
- JP-A- 2005 219 561
- JP-A- 2007 076 581
- JP-U- H0 592 033
- US-A- 4 489 556
- US-A- 4 566 276
- US-A- 4 702 078

## Description

### Background Art

The present invention relates to a technical field of a reservoir tank connection connector, which is for use in a hydraulic operation device, such as a hydraulic braking device using oil pressure or other hydraulic pressure, etc., and which is for connecting a reservoir tank arranged with a space from a master cylinder and for storing a hydraulic fluid to the master cylinder via a hose, and a technical field of a master cylinder provided with the reservoir tank connection connector and for generating the hydraulic pressure, and a braking device using the master cylinder.

In the prior art, some automobiles or other vehicles adopt a hydraulic braking device as the hydraulic operation device using the hydraulic pressure. In the hydraulic braking device, a master cylinder that generates the hydraulic pressure is used, and at the same time, a reservoir tank that stores the hydraulic fluid fed to the master cylinder is also used.

FR 2 861 356 A1 discloses a method of assembling a base of a reservoir on a master-cylinder and a corresponding arrangement.

JP 2005 219561 A1 discloses a mounting structure to prevent erroneous assembling of a cylinder body and a reservoir.

For the conventional hydraulic braking device using the reservoir tank and master cylinder, the reservoir tank that is arranged with a space from the master cylinder is connected with an end of a hose [for connection] with the master cylinder, and at the same time, the other end of the hose is connected with the reservoir tank connection connector made of a resin and attached on the master cylinder. This hydraulic braking device is described in JP-A-2004-243853. In addition, JP-A-2004-243853 names the reservoir tank connection connector as a "reservoir union".

The reservoir tank connection connector described in JP-A-2004-243853 comprises the following parts: an elongated nearly flat body with its longitudinal direction as the axial direction of the master cylinder, a L-shaped hose connection tube body, which is formed integrated with the upper surface of the body and arranged protruding significantly from the long side edge of the body on the side orthogonal to the longitudinal direction of the body, and at the same time, which is connected with the other end of the hose, and a cylinder connection tube body, which is formed integrated with the body and arranged protruding downward from the lower surface of the body, and at the same time, which is directly connected with the boss portion of the master cylinder.

However, in order to attach the reservoir tank connection connector on the master cylinder, in the prior art, the reservoir tank connection connector at the storage site is held by the conveying arm (conveying jig) of an automatic conveying robot for conveying to the site where the master cylinder is located. When the reservoir tank connection connector is conveyed by the automatic conveying robot, it is necessary to ensure that the reservoir tank connection connector is conveyed stably, and at the same time, the reservoir tank connection connector is kept in the horizontal posture and the cylinder connection tube body is kept at a good balance free of inclination with respect to the boss portion of the master cylinder. For this purpose, it is preferred that the long side edges on the two sides of the body be held and conveyed by the conveying arm of the automatic conveying robot.

However, for the reservoir tank connection connector described in JP-A-2004-243853, the L-shaped hose connection tube body protrudes significantly from the long side edge of the body. Consequently, when the long side edge of the body is held by the conveying arm of the connector conveying robot, it is believed quite possible that the conveying arm would interfere with the L-shaped hose connection tube body (that is, the conveying arm may hit the hose connection tube body) . As the conveying arm interferes with the hose connection tube body, damage or dent may be generated on the hose connection tube body made of resin by the hitting force of the conveying arm, or cloudy whitening phenomenon may take place for the hose connection tube body.

Also, in JP-A-2004-243853, there is no description of the interference between the L-shaped hose connection tube body and the conveying jig when the reservoir tank connection connector is conveyed. In addition, it also did not describe even the feature of conveying of the reservoir tank connection connector by a conveying jig. That is, the reservoir tank connection connector described in JP-A-2004-243853 did not consider the problem of interference between the hose connection tube body and the conveying jig at all.

### Disclosure of the invention

The purpose of the present invention is to solve the problems of the prior art by providing a reservoir tank connection connector that can prevent interference between the hose connection section and the conveying jig, a master cylinder provided with the reservoir tank connection connector, and a braking device using the master cylinder.

In order to realize the purpose, the present invention provides a reservoir tank connection connector, according to independent claim 1.

In addition, the reservoir tank connection connector of the present invention has the following characteristic features: the connector body is formed in a rectangular shape or nearly rectangular shape; the hose connection section is arranged extending from the upper portion of the connector body and protruding outwardly from the long side edge on one side of the connector body; and the interference preventing section is arranged along the long side edge on one side, and it is the conveying arm guide section that guides the conveying arm of the conveying jig.

In addition, the reservoir tank connection connector of the present invention has the following characteristic features: the conveying arm guide section is arranged along the long side edge on one side of the connector body where the hose connection section protrudes, and it has a first conveying arm guide section that guides the first conveying arm of the conveying jig; at the same time, it has a second conveying arm guide section which is arranged along the long side edge of other side of the connector body in which the hose connection is arranged not to protrude and that guides the second conveying arm of the conveying jig; the first conveying arm has a first supporting surface formed by a slope surface, and at the same time, the second conveying arm has a second supporting surface formed by a slope surface; the slope surfaces of the first and second supporting surfaces together form a nearly V shape; the first conveying arm guide section has a first supported surface inclined to contact the first supporting surface, and at the same time, the second conveying arm guide section has a second supported surface inclined to contact the second supporting surface; and the slope surfaces of the first and second supported surfaces together form a nearly V shape.

In addition, the reservoir tank connection connector of the present invention has the following characteristic feature: the first conveying arm guide section is arranged protruding from the upper portion of the connector body, and it is arranged divided along the long side edge on one side other than the region where the hose connection section protrudes.

In addition, the present invention also provides a master cylinder according to independent claim 5.

Also, the present invention provides a braking device according to independent claim 6.

For the reservoir tank connection connector of the present invention with the constitution, the reservoir tank connection connector has an interference preventing section that prevents interference of the conveying jig with the hose connection section protruding from the edge of the connector body. Consequently, when the reservoir tank connection connector is conveyed, the interference preventing section can reliably prevent the conveying jig from hitting the hose connection section. As a result, it is possible to prevent generation of damage or dent on the hose connection section due to the hitting force of the conveying jig, and at the same time, it is possible to improve the sealing property between the hose connection section and the hose. Especially, when the connector body and hose connection section are formed monolithically from a resin to form the reservoir tank connection connector, it is possible to prevent cloudy whitening phenomenon of the hose connection section due to the hitting force of the conveying jig.

Also, the upper portion of the connector body is formed in a rectangular or nearly rectangular shape, and at the same time, a pair of conveying arm guide sections is arranged along the long side edges on the two sides corresponding to them, respectively, to guide the pair of conveying arms of the conveying jig. Consequently, the supported surfaces of the conveying arm guide sections of the two long side edges are supported by the supporting surfaces of the two conveying arms, so that the reservoir tank connection connector can be conveyed with a high stability.

Furthermore, the conveying arms include a first conveying arm and a second conveying arm as a pair, and the conveying arm guide sections include a first conveying arm guide section and a second conveying arm guide section as a pair guiding the corresponding first and second conveying arms, respectively. The first and second conveying arms each have a first and a second supporting surfaces that together form a nearly V shape, and at the same time, the first and second conveying arm guide sections each have a first and a second supported surfaces that together form a nearly V shape. Here, the first and second supporting surfaces support and are in contact with the corresponding first and second supported surfaces, respectively. Consequently, while the first and second supporting surfaces contact with and support the first and second supported surfaces, respectively, it is possible to hold the reservoir tank connection connector horizontally as it is centered with respect to the center of the conveying jig.

In addition, the hose connection section is arranged extending from the upper portion of the connector body and protruding outwardly from the long side edge on one side of the connector body. Also, the first and second conveying arm guide sections are arranged protruding from the upper portion of the connector body, and they are arranged divided along the long side edge on one side outside the region where the hose connection section protrudes. That is, the first conveying arm guide section protruding upward is not arranged on the long side edge of the region where the hose connection section protrudes. Consequently, it is possible to lower the hose connection section to approach the long side edge. As a result, even when the first conveying arm guide section protruding upward is arranged on the long side edge of the connector body, it is still possible to suppress the height of the hose connection section. At the same time, even when the height of the hose connection section is decreased, it is still possible to prevent interference between the first conveying arm and the hose connection section by the first conveying arm guide section. As a result, it is possible to realize a reservoir tank connection connector that can decrease the height of the hose connection section while preventing interference between the first conveying arm and the hose connection section.

In addition, as the position of the hose connection section connected with the hose connected with the reservoir tank is decreased, it is possible to further lower the connection position of the hose. As a result, the layout of the hose becomes easier, and it is possible to improve the capability in handling and bending the hose.

Besides, as the conveying arm guide section is divided and arranged except the long side edge of the region where the hose connection section protrudes, it is possible to extend the hose connection section.

In addition, by arranging the conveying arm guide section protruding upward, it is possible to reduce the thickness of the plate-shaped upper portion of the connector body of the reservoir tank connection connector. As a result, it is possible to prevent deformation, such as bending, etc., due to contraction when resin is molded for the reservoir tank connection connector. Especially, as the peripheral wall protrudes downward on the peripheral edge of the upper portion of the connector body, and the connector body is formed in a cuboid shape, it is possible to efficiently prevent deformation caused by contraction in resin molding.

In addition, as the conveying arm guide section is divided as it is arranged, it is easy to set the position of the hose stopper that positions the tip of the hose fit on the hose connection section while being arranged on the connector body or the hose connection section.

According to the master cylinder provided with the reservoir tank connection connector of the present invention, it is possible to suppress the height of the reservoir tank connection connector. Consequently, it is possible to form the master cylinder in a small size and compact shape while the reservoir tank connection connector is installed. As a result, it is possible to prevent interference with the other parts in the engine room with a limited space for configuration. Consequently, it is possible to improve the degree of freedom in configuration of the master cylinder.

On the other hand, for the braking device provided with the master cylinder of the present invention, it is possible to improve the degree of freedom for arranging the master cylinder, so that it is possible to improve the degree of freedom in handling and bending the braking hydraulic pipeline.

### Brief description of the Drawings

FIG. 1 is a schematic diagram illustrating the hydraulic braking device in an example of the embodiment of the reservoir tank connection connector of the present invention.
FIG. 2 illustrates the master cylinder having the reservoir tank connection connector installed on it. (a) is a front view, (b) is a plane view, and (c) is a left side view.
FIG. 3 is a cross-sectional view taken across III-III in FIG. 2(b).
FIG. 4 illustrates the reservoir tank connection connector. (a) is a front view, (b) is a plane view, (c) is a left side view, (d) is a cross-sectional view taken across IVD-IVD in (b), and (e) is a cross-sectional view taken across IVE-IVE in (b).
FIG. 5 illustrates the effect in preventing interference between the conveying arm and the hose connection tube body. (a) is a diagram illustrating the state when the conveying arm is inserted, and (b) is a diagram illustrating the state when the reservoir tank connection connector is raised by the conveying arm.
FIG. 6 illustrates the conveying jig. (a) is a front view, (b) is a plane view, (c) is a right side view, (d) is an enlarged view of portion VID in (c), and (e) is an enlarged view of portion IVE.

### Best mode for carrying out the invention

In the following, the optimum embodiment of the present invention will be explained with reference to the drawings.

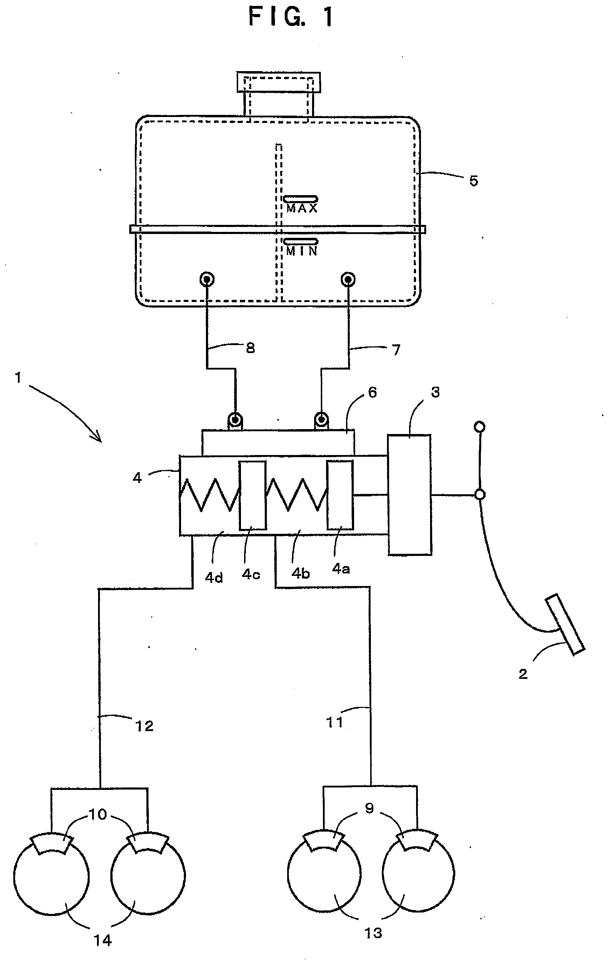

FIG. 1 is a schematic diagram illustrating the braking device provided with an example of the embodiment of the reservoir tank connection connector of the present invention.

As shown in 1, in this example, hydraulic braking device 1 is basically the same as the well known dual hydraulic braking device in the prior art. That is, hydraulic braking device 1 comprises the following parts: brake pedal 2, booster 3, tandem master cylinder 4, reservoir tank 5, reservoir tank connection connector 6, hoses 7, 8 as dual brake fluid supply pipelines, dual braking cylinders 9, 10, and dual braking hydraulic pipelines 11, 12.

While reservoir tank 5 is arranged with a space from tandem master cylinder 4, reservoir tank connection connector 6 is installed on tandem master cylinder 4. Here, reservoir tank 5 and reservoir tank connection connector 6 are connected with each other via hoses 7, 8. Then, the brake fluid as the hydraulic fluid in reservoir tank 5 is supplied via dual hoses 7, 8 and reservoir tank connection connector 6 to primary hydraulic chamber 4b and secondary hydraulic chamber 4d of tandem master cylinder 4, respectively. The brake fluid supplied to tandem master cylinder 4 is then further fed via dual braking hydraulic pipelines 11, 12 to braking cylinders 9, 10 of the systems, respectively.

When the driver steps down brake pedal 2, booster 3 works to boost and output the force stepping on the pedal with a prescribed servo ratio. The output of booster 3 drives primary piston 4a of the cylinder body of tandem master cylinder 4, so that the brake fluid of primary hydraulic chamber 4b is fed via braking hydraulic pipeline 11 to brake cylinder 9 of one system. Also, secondary piston 4c is driven, so that the brake fluid in secondary hydraulic chamber 4d is fed via braking hydraulic pipeline 12 to brake cylinder 10 of the other system. As the loss strokes in the brake systems diminish, tandem master cylinder 4 generates a hydraulic pressure. The hydraulic pressure generated by tandem master cylinder 4 is transmitted to braking cylinders 9, 10, respectively, so that braking cylinders 9, 10 generate a brake force, and brake is applied to wheels 13, 14 of the systems.

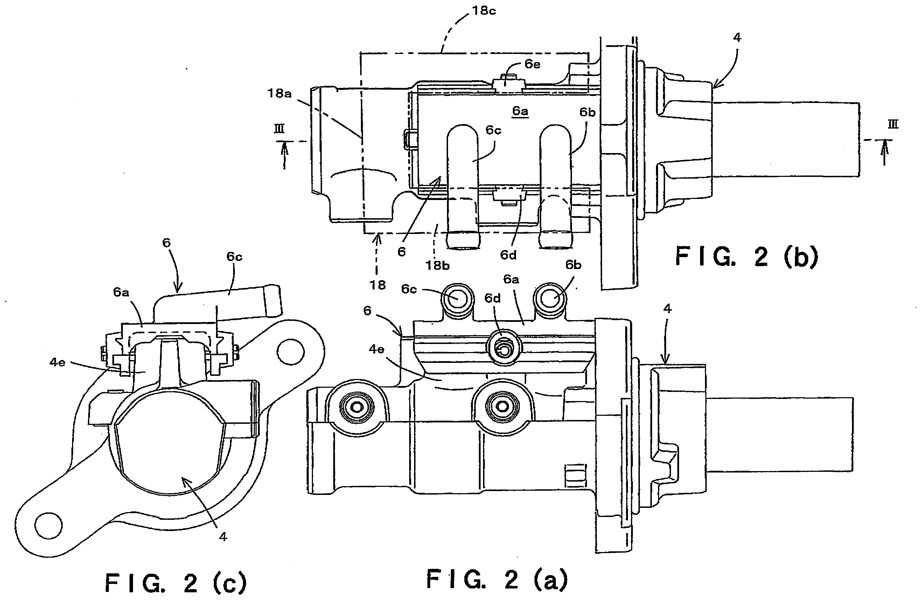

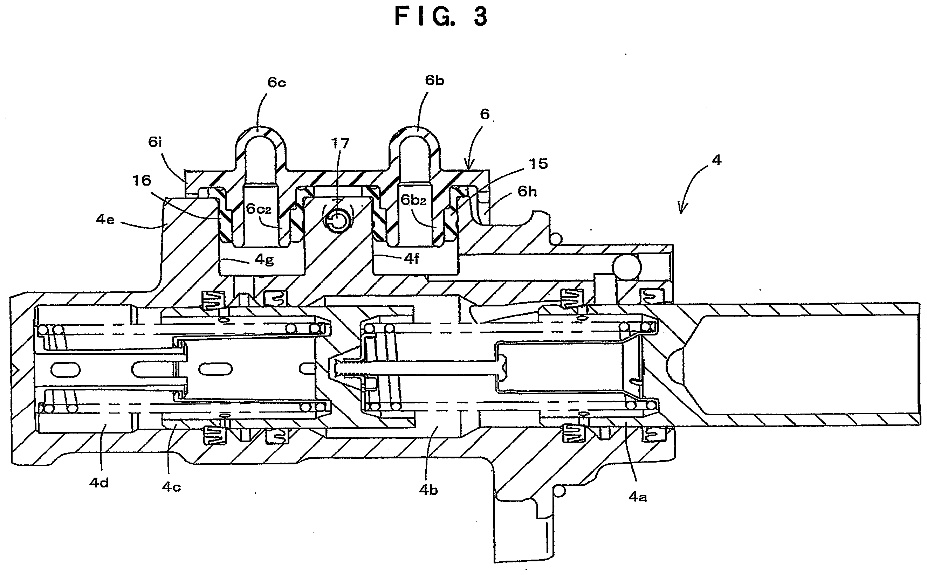

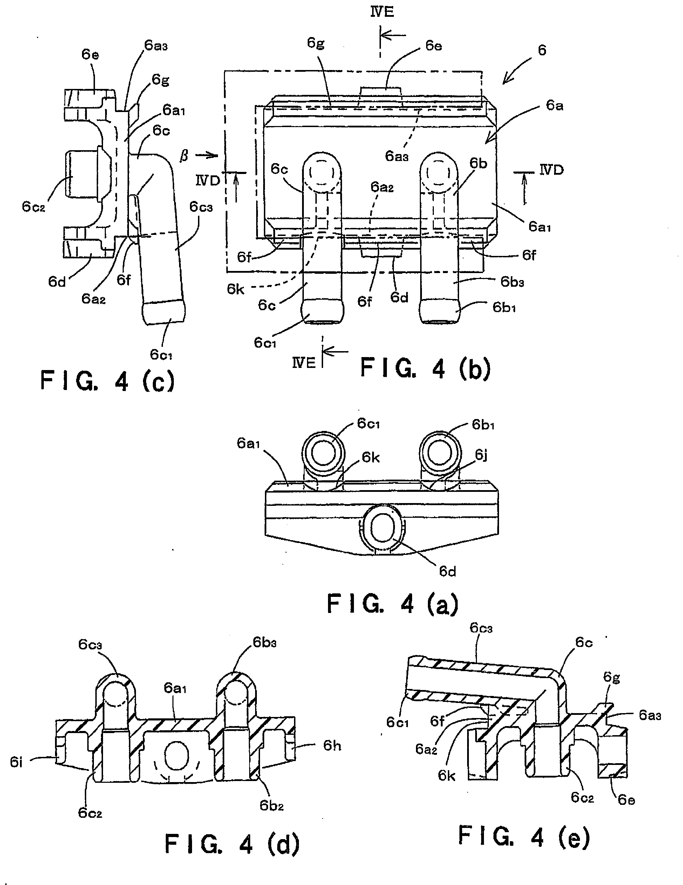

As shown in FIGS. 2 (a) through (c) and FIG. 3, reservoir tank connection connector 6 in this example is installed above tandem master cylinder 4. As shown in FIGS. 4 (a) through (c), reservoir tank connection connector 6 comprises the following parts: connector body 6a in a rectangular shape or nearly rectangular shape, a pair of hose connection tube bodies 6b, 6c made of L-shaped pipes anchored with a prescribed spacing between them in plate-shaped upper portion 6a₁ of connector body 6a and through this upper portion 6a₁, a pair of mounting boss sections 6d, 6e, and a pair of conveying arm guide sections 6f, 6g arranged extending on the long side edge of upper portion 6a₁ of connector body 6a. The nearly rectangular shape of connector body 6a means that any shape is alright as long as a pair of long side edges are in straight linear shape, while the short side edges may not necessarily be of a straight linear shape. They may be arc shape or other curved shape as well.

The L-shaped pair of hose connection tube bodies 6b, 6c each have two nipple-shaped hose connection sections 6b₁, 6c₁ protruding significantly from one long side edge 6a₂ of connector body 6a, and master cylinder side connection sections 6b₂, 6c₂ arranged in brake fluid supply holes 4f, 4g of brake fluid supply boss section 4e of tandem master cylinder 4 shown in FIG. 3. Here, hose connection sections 6b₁, 6c₁ each have one end connected with the other end of hoses 7, 8, which each have one end connected with reservoir tank 5. In addition, as shown in FIG. 3, master cylinder side connection sections 6b₂, 6c₂ are liquid-tightly fit in brake fluid supply holes 4f, 4g of tandem master cylinder 4 via sealing members 15, 16, respectively, and at the same time, reservoir tank connection connector 6 is supported on brake fluid supply boss section 4e. Here, brake fluid supply holes 4f, 4g are connected with primary hydraulic chamber 4b and secondary hydraulic chamber 4d, respectively, when tandem master cylinder 4 is not working.

Mounting boss sections 6d, 6e as a pair are installed coaxially, and at the same time, they are connected with brake fluid supply boss section 4e by connecting pins 17. In addition, as shown in FIG. 4(d), on the short side edges on the two sides of upper portion 6a₁ of connector body 6a, supporting sections 6h, 6i are erected downward respectively. These supporting sections 6h, 6i can make contact with brake fluid supply boss section 4e of tandem master cylinder 4.

Conveying arm guide sections 6f, 6g each have the cross-section in the direction orthogonal to the longitudinal direction formed in a nearly parallelogram shape. In this case, while one conveying arm guide section 6f is arranged on long side edge 6a₂ on one side where hose connection sections 6b₁, 6c₁ of hose connection tube bodies 6b, 6c as a pair protrude, the other conveying arm guide section 6g is arranged on long side edge 6a₃ on the other side facing one long side edge 6a₂. In addition, conveying arm guide section 6f on one side is not arranged on regions (portions) 6j, 6k of long side edge 6a₂ where hose connection sections 6b₁, 6c₁ protrude. Instead, it is arranged as it is divided intermittently along long side edge 6a₂. On the other hand, the other conveying arm guide section 6g is arranged continuously along long side edge 6a₃ over the entirety of long side edge 6a₃.

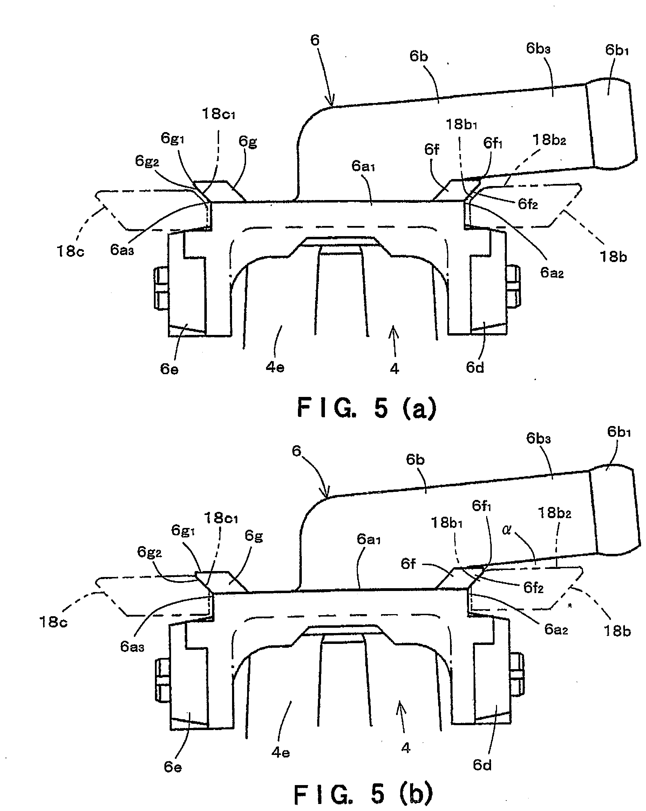

As shown in FIGS. 5(a) and (b), conveying arm guide sections 6f, 6g are formed protruding upward from the upper surface of upper portion 6a₁ of connector body 6a. Here, while one conveying arm guide section 6f is arranged protruding outward (to the right hand side shown in FIG. 5(a)) from long side edge 6a₂ on one side, there is a supported surface 6f₂ from the plate shaped slope surface between its protruding end 6f₁ and long side edge 6a₂. On the other hand, the other conveying arm guide sections 6g are formed protruding outward (to the left hand side shown in FIG. 5 (a)) from the other long side edge 6a₃, while there is a supported surface 6g₂ made of the plate shaped slope surface between its protruding end 6g₁ and long side edge 6a₃. Conveying arm guide sections 6f, 6g are arranged symmetrically while their cross-sectional shapes are formed in the same size.

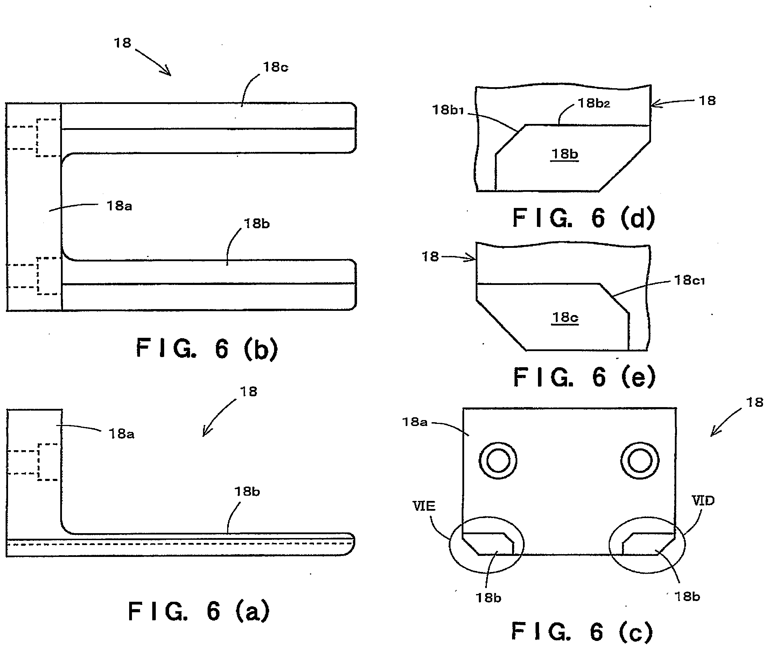

As shown in FIGS. 6 (a) through (c), conveying jig 18 for conveying reservoir tank connection connector 6 comprises attachment section 18a attached on the automatic conveying robot not shown in the drawing, and a pair of slender conveying arms 18b, 18c arranged extending parallel with each other. Slender conveying arms 18b, 18c as a pair are formed protruding from the two end surfaces of attachment section 18a with a prescribed spacing between them, and conveying jig 18 has a front view in an L shape (and it has a plane view in U shape) .

Conveying arms 18b, 18c each have a hexagonal cross-sectional shape in the longitudinal direction. As shown in FIG. 6(d), one conveying arm 18b has supporting surface 18b₁ made of a slope surface on its inner-side upper end. The inclination angle of supporting surface 18b₁ with respect to the horizontal direction is selected to be equal to or nearly equal to the inclination angle of supported surface 6f₂ of conveying arm guide section 6f with respect to the horizontal direction. Also, as shown in FIG. 6(e), the other conveying arm 18c has supporting surface 18c₁ made of a slope surface on its inner-side upper end. The inclination angle of supporting surface 18c₁ with respect to the horizontal direction is selected to be equal to or nearly equal to the inclination angle of supported surface 6g₂ of conveying arm guide section 6g with respect to the horizontal direction. Here, conveying arms 18b, 18c are formed with their cross-sections in the same size, and at the same time, they are formed symmetric to each other. Consequently, two supporting surfaces 18b₁, 18c₁ have their slope surfaces together depicting a nearly V shape, and so do the two supported surfaces 6f₂, 6g₂.

Then, as conveying jig 18 conveys reservoir tank connection connector 6, conveying arms 18b, 18c indicated by double-dot-dash lines in FIG. 5 (a) can enter the portion below supported surface 6f₂ of conveying arm guide section 6f and supported surface 6g₂ of conveying arm guide section 6g, respectively. In addition, supporting surfaces 18b₁, 18c₁ of conveying arms 18b, 18c can make contact with supported surfaces 6f₂, 6g₂ of conveying arm guide sections 6f, 6g, respectively.

As indicated by the double-dot-dash lines in FIG. 5(b), while one supporting surface 18b₁ is in contact with supported surface 6f₂, a prescribed gap α is generated between upper surface 18b₂ of one conveying arm 18b and the lower surface of hose sealing section 6b₃ of hose seal connecting part 6b₂ protruding from long side edge 6a₂, so that conveying arm 18b does not interfere (that is, do not hit) with hose connection tube body 6b on one side. Also, although not shown in FIGS. 5 (a) and (b), when supporting surface 18b₁ is in contact with supported surface 6f₂, similarly, prescribed gap α is also generated between upper surface 18b₂ of conveying arm 18b and the lower surface of hose sealing section 6c₃ of the other hose connection tube body 6c, so that conveying arm 18b does not interfere with the other hose connection tube body 6c. That is, while one conveying arm guide section 6f works as the supported section of conveying arm 18b, it also works as an interference preventing section for preventing interference between conveying arm 18b and hose connection tube bodies 6b, 6c.

As explained above, two supporting surfaces 18b₁, 18c₁ are slope surfaces that together form a V shape, and so are the two supported surfaces 6f₂, 6g₂. Consequently, while two supporting surfaces 18b₁, 18c₁ are in contact with their corresponding supported surfaces 6f₂, 6g₂, respectively, reservoir tank connection connector 6 is held horizontally as it is centered at the center in the direction orthogonal to the longitudinal direction of conveying jig 18 (that is, the vertical direction shown in FIG. 6(b)).

For reservoir tank connection connector 6 in this example with the constitution, it is conveyed from the storage site of reservoir tank connection connector 6 to the site where it is assembled to tandem master cylinder 4. In this case, as shown in FIG. 4(b), conveying arms 18b, 18c of conveying jig 18 of the automatic conveying robot are driven to move in the β direction from the front side in the longitudinal direction of reservoir tank connection connector 6, and, as shown in FIG. 5 (a), they are inserted to below supported surface 6f₂ of conveying arm guide section 6f and supported surface 6g₂ of conveying arm guide section 6g, respectively. As these conveying arms 18b, 18c are being driven to carry out insertion, a prescribed gap (play) is generated between supporting surfaces 18b₁, 18c₁ of conveying arms 18b, 18c and supported surfaces 6f₂, 6g₂ of conveying arm guide sections 6f, 6g, respectively. Consequently, conveying arm 18b on one side does not interfere with hose connection tube bodies 6b, 6c.

Next, conveying jig 18 is raised, and supporting surfaces 18b₁, 18c₁ of conveying arms 18b, 18c make surface contact or nearly surface contact with supported surfaces 6f₂, 6g₂ of conveying arm guide sections 6f, 6g, respectively. In this case, one conveying arm guide section 6f stops the relative rising movement of conveying arm 18b with respect to reservoir tank connection connector 6. As a result, even when the one conveying arm 18b rises, as prescribed gap α is generated between supporting surfaces 18b₁, 18c₁ and supported surfaces 6f₂, 6g₂, no interference takes place with hose connection tube bodies 6b, 6c. In addition, as conveying jig 18 is raised, two conveying arms 18b, 18c raise reservoir tank connection connector 6 from the site of storage. In this case, as supported surfaces 6f₂, 6g₂ of reservoir tank connection connector 6 and supporting surfaces 18b₁, 18c₁ of conveying arms 18b, 18c are inclined together to depict a V shape, reservoir tank connection connector 6 is raised horizontally or nearly horizontally as it is centered at the center in the direction orthogonal to the longitudinal direction of conveying jig 18.

Then, as shown in FIG. 2(b), the automatic conveying robot conveys reservoir tank connection connector 6 to the site for assembling it to tandem master cylinder 4. Here, even during conveying of reservoir tank connection connector 6 by the automatic conveying robot, while reservoir tank connection connector 6 is conveyed with high stability, it is conveyed with good balance in the horizontal posture without inclination of master cylinder side connection sections 6b₂, 6c₂ with respect to brake fluid supply holes 4f, 4g of boss section 4e of master cylinder 4, respectively.

For reservoir tank connection connector 6 in this example, there is conveying arm guide section 6f as an interference preventing section for preventing interference between conveying arm 18b of conveying jig 18 and hose connection tube bodies 6b, 6c. Consequently, when reservoir tank connection connector 6 is conveyed, by conveying arm guide section 6f, it is possible to reliably prevent contact of conveying arm 18b with hose sealing sections 6b₃, 6c₃ of hose connection tube bodies 6b, 6c. As a result, it is possible to prevent generation of damage or dent on hose connection tube bodies 6b, 6c made of resin by the hitting force of conveying arm 18b, and at the same time, it is possible to prevent generation of cloudy whitening phenomenon of hose connection tube bodies 6b, 6c.

In addition, while upper portion 6a₁ of connector body 6a is formed in a rectangular shape or nearly rectangular shape, conveying arm guide sections 6f, 6g as a pair are arranged along long side edges 6a₂, 6a₃ on the two sides corresponding to them, respectively, so that conveying arms 18b, 18c as a pair of conveying jig 18 are guided. Consequently, as supporting surfaces 18b₁, 18c₁ of conveying arms 18b, 18c support supported surfaces 6f₂, 6g₂ of conveying arm guide sections 6f, 6g on the two long side edges 6a₂, 6a₃, reservoir tank connection connector 4 can be conveyed with high stability.

In addition, hose connection tube bodies 6b, 6c are arranged extending from upper section 6a₁ of connector body 6, and they protrude outward from long side edge 6a₂ on one side of connector body 6. In this case, conveying arm guide section 6f on the side where hose connection tube bodies 6b, 6c protrude outward is arranged divided and protruding upward only on long side edge 6a₂ excluding regions 6j, 6k including the site where hose connection tube bodies 6b, 6c protrude. Consequently, on long side edge 6a₂ of regions 6j, 6k where hose connection tube bodies 6b, 6c protrude, conveying arm guide section 6f protruding upward is not arranged. Consequently, by lowering hose sealing sections 6b₃, 6c₃, it is possible to approach long side edge 6a₂. As a result, even when conveying arm guide section 6f protruding upward is arranged on long side edge 6a₂ of connector body 6a, it is still possible to suppress the height of hose connection tube bodies 6b, 6c, and at the same time, even when the height of hose connection tube bodies 6b, 6c is lowered, it is still possible to prevent interference between conveying arm 18b and hose sealing sections 6b₃, 6c₃ by supported surface 6f₂ of conveying arm guide section 6f. In this way, it is possible to realize reservoir tank connection connector 6 that can prevent interference between conveying arm 18b and hose sealing sections 6b₃, 6c₃ while lowering the height of hose connection tube bodies 6b, 6c.

In addition, as the positions of hose sealing sections 6b₃, 6c₃ are decreased, it is possible to further lower the connecting positions of hoses 7, 8. As a result, the layout of hoses 7, 8 becomes easier, and the capability in handling and bending hoses 7, 8 can be improved.

In addition, as conveying arm guide section 6f is arranged divided excluding long side edge 6a₂ of regions 6j, 6k where hose connection tube bodies 6b, 6c protrude, it is possible to expand hose sealing sections 6b₃, 6c₃ of hose connection tube bodies 6b, 6c.

In addition, as conveying arm guide sections 6f, 6g are arranged protruding upward, plate shaped upper portion 6a₁ of connector body 6a of reservoir tank connection connector 6 can be made thinner. As a result, the bending deformation or the like can hardly take place during a contraction when the resin is molded to form reservoir tank connection connector 6. Especially, when the peripheral wall is formed protruding downward on the peripheral edge of upper portion 6a₁, and connector body 6a is formed in a cuboid shape, it is possible to efficiently prevent deformation caused by contraction when the resin is molded to form it.

In addition, as conveying arm guide section 6f is arranged divided, it is easy to set the position for the hose stopper (not shown in the drawing) that positions the tips of hoses 7, 8 arranged on connector body 6a or hose connection tube bodies 6b, 6c and fit with hose sealing sections 6b₃, 6c₃.

In addition, as explained above, the two supporting surfaces 18b₁, 18c₁ and the two supported surfaces 6f₂, 6g₂ are both formed as slope surfaces, so that while supporting surfaces 18b₁, 18c₁ are in contact with their corresponding supported surfaces 6f₂, 6g₂, reservoir tank connection connector 6 can be held horizontally while centered with respect to the center of conveying jig 18 as explained above.

In addition, for tandem master cylinder 4 provided with reservoir tank connection connector 6, it is possible to suppress the height of reservoir tank connection connector 6. Consequently, it is possible to form tandem master cylinder 4 with reservoir tank connection connector 6 installed on it in a small size and compact shape. As a result, it is possible to prevent interference between tandem master cylinder 4 and other parts in the engine room that has a limited space for configuration. Consequently, it is possible to increase the degree of freedom in configuration of tandem master cylinder 4.

On the other hand, for hydraulic braking device 1 provided with tandem master cylinder 4 in this example, it is possible to increase the degree of freedom for configuration of tandem master cylinder 4, so that it is possible to increase the degree of freedom for handling and bending dual braking hydraulic pipelines 11, 12.

The present invention is not limited to the examples. Various changes in the design can be made within the scope of items described in the claims.

### Industrial applicability

The reservoir tank connection connector of the present invention can be adopted preferably as the reservoir tank connection connector for connecting a reservoir tank for storing the hydraulic fluid with a master cylinder.

Also, the master cylinder provided with the reservoir tank connection connector of the present invention can be preferably adopted as the master cylinder for generating hydraulic pressure in a hydraulic operation device, such as a hydraulic braking device, etc., using the oil pressure or other hydraulic pressure.

In addition, the braking device of the present invention can be preferably used in the hydraulic braking device using a master cylinder.

## Claims

1. A reservoir tank connection connector (6), **characterized by** at least the following parts:
a connector body (6a) installed on a master cylinder (4),
a hose connection tube body (6b, 6c), which is L-shaped and is arranged protruding from the edge of the connector body (6a) and has a hose (7,8) connected with the reservoir tank (5) connected thereto, and
a conveying arm guide section (6f) as an interference preventing section which is arranged on the connector body (6a) and prevents interference of a conveying jig (18) with the hose connection tube body (6b, 6c) when the connector body (6a) is supported by the conveying jig (18), wherein the conveying arm guide section (6f) on the side where the hose connection tube body (6b, 6c) protrudes is arranged divided and protruding only on a long side edge (6a2) of the connector body (6a) excluding regions (6j, 6k), the regions (6j, 6k) including the side where the hose connection tube body (6b, 6c) protrudes.

2. The reservoir tank connection connector (6) according to Claim 1, wherein the connector body (6a) is formed in a rectangular shape or nearly rectangular shape;
the hose connection tube body (6b, 6c) is arranged extending from the upper portion of the connector body (6a) and protruding outwardly from the long side edge on one side of the connector body (6a); and
the interference preventing section is arranged along the long side edge on one side, and it is the conveying arm guide section (6f, 6g) that guides the conveying arm (18b, 18c) of the conveying jig (18).

3. The reservoir tank connection connector (6) according to Claim 2, wherein the conveying arm guide section (6f, 6g) is arranged along the long side edge on one side of the connector body (6a) where the hose connection tube body (6b, 6c) protrudes, and it has a first conveying arm guide section (6f) that guides the first conveying arm (18b) of the conveying jig (18); at the same time, it has a second conveying arm guide section (6g) that guides the second conveying arm (18c) of the conveying jig (18), provided along the long edge of the other side of the connector body (6a) in which the hose connection tube body (6b, 6c) does not protrude; the first conveying arm (18b) has a first supporting surface (18b₁) formed by a slope surface, and at the same time, the second conveying arm (18c) has a second supporting surface (18c₁) formed by a slope surface; the slope surfaces of the first and second supporting surfaces (18b₁, 18c₁) together form a nearly V shape; the first conveying arm guide section (6f) has a first supported surface (6f₂) inclined to contact the first supporting surface (18b₁), and at the same time, the second conveying arm guide section (6g) has a second supported surface (6g₂) inclined to contact the second supporting surface (18c₁); and the slope surfaces of the first and second supported surfaces (6f₂, 6g₂) together form a nearly V shape.

4. The reservoir tank connection connector (6) according to Claim 3, wherein the first and second conveying arm guide sections (6f, 6g) are arranged protruding from the upper portion of the connector body (6a), and arranged divided along the long side edge on one side other than the region where the hose connection tube body (6b, 6c) protrudes.

5. A master cylinder (4) comprising
a cylinder body,
a piston (4a, 4c) that can be inserted into the cylinder body in liquid-tight state and in a slidable way to form a hydraulic chamber (4b, 4d) and can generate a hydraulic pressure in the hydraulic chamber (4b, 4d) when working,
a hydraulic fluid supply hole (4f, 4g), which is arranged on the cylinder body and is normally connected with the hydraulic chamber (4b, 4d), and
a reservoir tank connection connector (6), which is installed on the hydraulic fluid supply hole (4f, 4g) and which supplies the hydraulic fluid in the reservoir tank (5) to the hydraulic fluid supply hole (4f, 4g);
**characterized in that** the reservoir tank connection connector (6) is the reservoir tank connection connector (6) according to any one of Claims 1 to 4.

6. A braking device (1), having at least the following parts:
a reservoir tank (5) that stores the hydraulic fluid,
a master cylinder (4), which has a reservoir tank connection connector (6) connected to the reservoir tank (5) via a hose (7, 8), and supplies the hydraulic fluid in the reservoir tank (5) via the hose (7, 8) and the reservoir tank connection connector (6), and at the same time, generates a braking pressure in working, and
a braking cylinder (9, 10) that works under the hydraulic pressure from the master cylinder (4);
**characterized in that** the master cylinder (4) is the master cylinder (4) according to Claim 5.

## Patentansprüche

1. Vorratstankverbindungsverbinder (6), **gekennzeichnet durch** zumindest die folgenden Teile:
einen Verbinderkörper (6a), der an einem Hauptzylinder (4) installiert ist,
einen Schlauchverbindungsrohrkörper (6b, 6c), der L-förmig ist und so angeordnet ist, dass er von der Kante des Verbinderkörpers (6a) vorsteht, und einen Schlauch (7, 8) besitzt, der mit dem damit verbundenen Vorratstank (5) verbunden ist, und
einen Transportarmführungsabschnitt (6f) als ein Störungsverhinderungsabschnitt, der an dem Verbinderkörper (6a) angeordnet ist und eine gegenseitige Störung einer Transporteinspanneinrichtung (18) und des Schlauchverbindungsrohrkörpers (6b, 6c) verhindert, wenn der Verbinderkörper (6a) durch die Transporteinspanneinrichtung (18) getragen wird, wobei der Transportarmführungsabschnitt 6f) auf der Seite, auf der der Schlauchverbindungsrohrkörper (6b, 6c) vorsteht, unterteilt angeordnet ist und nur auf einer langen Seitenkante (6a2) des Verbinderkörpers (6a) mit Ausnahme von Bereichen (6j, 6k) vorsteht, wobei die Bereiche (6j, 6k) die Seite enthalten, auf der der Schlauchverbindungsrohrkörper (6b, 6c) vorsteht.

2. Vorratstankverbindungsverbinder (6) nach Anspruch 1, wobei der Verbindungskörper (6a) in einer rechtwinkligen Form oder einer nahezu rechtwinkligen Form ausgebildet ist;
der Schlauchverbindungsrohrkörper (6b, 6c) so angeordnet ist, dass er sich von dem oberen Abschnitt des Verbinderkörpers (6a) erstreckt und von der langen Seitenkante auf einer Seite des Verbinderkörpers (6a) auswärts vorsteht; und
der Störungsverhinderungsabschnitt längs der langen Seitenkante auf einer Seite angeordnet ist, wobei der Transportarmführungsabschnitt (6f, 6g) den Transportarm (18b, 18c) der Transporteinspanneinrichtung (18) führt.

3. Vorratstankverbindungsverbinder (6) nach Anspruch 2, wobei der Transportarmführungsabschnitt (6f, 6g) längs der langen Seitenkante auf einer Seite des Verbinderkörpers (6a) angeordnet ist, wo der Schlauchverbindungsrohrkörper (6b, 6c) vorsteht, wobei ein erster Transportarmführungsabschnitt (6f) den ersten Transportarm (18b) der Transporteinspanneinrichtung (18) führt; wobei er gleichzeitig einen zweiten Transportarmführungsabschnitt (6g) besitzt, der den zweiten Transportarm (18c) der Transporteinspanneinrichtung (18) führt und entlang der langen Kante der anderen Seite des Verbinderkörpers (6a) vorgesehen ist, auf der der Schlauchverbindungsrohrkörper (6b, 6c) nicht vorsteht; der erste Transportarm (18b) eine erste Tragoberfläche (18b₁) besitzt, die durch eine schräge Oberfläche gebildet ist, während gleichzeitig der zweite Transportarm (18c) eine zweite Tragoberfläche (18c₁) besitzt, die durch eine schräge Oberfläche gebildet ist; die schrägen Oberflächen der ersten und der zweiten Tragoberfläche (18b₁, 18c₁) zusammen angenähert eine V-Form bilden; der erste Transportarmführungsabschnitt (6f) eine erste Tragoberfläche (6f₂) besitzt, die geneigt ist, um mit der ersten Tragoberfläche (18b₁) in Kontakt zu gelangen, während gleichzeitig der zweite Transportarmführungsabschnitt (6g) eine zweite Tragoberfläche (6g₂) besitzt, die geneigt ist, um mit der zweiten Tragoberfläche (18c₁) in Kontakt zu gelangen; und die schrägen Oberflächen der ersten und der zweiten Tragoberflächen (6f₂, 6g₂) zusammen angenähert eine V-Form bilden.

4. Vorratstankverbindungsverbinder (6) nach Anspruch 3, wobei der erste und der zweite Transportarmführungsabschnitt (6f, 6g) so angeordnet sind, dass sie von dem oberen Abschnitt des Verbinderkörpers (6a) vorstehen, und längs der langen Seitenkante auf einer Seite, die von dem Bereich, wo der Schlauchverbindungsrohrkörper (6b, 6c) vorsteht, verschieden ist, geteilt angeordnet sind.

5. Hauptzylinder (4), der Folgendes umfasst:
einen Zylinderkörper,
einen Kolben (4a, 4c), der in den Zylinderkörper in einem flüssigkeitsdichten Zustand und gleitend eingesetzt werden kann, um eine Hydraulikkammer (4b, 4d) zu bilden, und einen Hydraulikdruck in der Hydraulikkammer (4b, 4d) erzeugen kann, wenn er arbeitet,
ein Hydraulikfluidzufuhrloch (4f, 4g), das in dem Zylinderkörper angeordnet und normalerweise mit der Hydraulikkammer (4b, 4d) verbunden ist, und
einen Vorratstankverbindungsverbinder (6), der an dem Hydraulikfluidzufuhrloch (4f, 4g) installiert ist und das Hydraulikfluid in dem Vorratstank (5) dem Hydraulikfluidzufuhrloch (4f, 4g) zuführt;
**dadurch gekennzeichnet, dass** der Vorratstankverbindungsverbinder (6) der Vorratstankverbindungsverbinder (6) nach einem der Ansprüche 1 bis 4 ist.

6. Bremsvorrichtung (1), die wenigstens die folgenden Teile besitzt:
einen Vorratstank (5), der Hydraulikfluid speichert,
einen Hauptzylinder (4), der einen Vorratstankverbindungsverbinder (6) besitzt, der mit dem Vorratstank (5) über einen Schlauch (7, 8) verbunden ist, und das Hydraulikfluid in dem Vorratstank (5) über den Schlauch (7, 8) und den Vorratstankverbindungsverbinder (6) zuführt und gleichzeitig einen Bremsdruck erzeugt, wenn er arbeitet, und
einen Bremszylinder (9, 10), der unter dem Hydraulikdruck von dem Hauptzylinder (4) arbeitet;
**dadurch gekennzeichnet, dass** der Hauptzylinder (4) der Hauptzylinder (4) nach Anspruch 5 ist.

## Revendications

1. Raccord de connexion (6) à un réservoir **caractérisé en ce qu'**il comporte
un corps de raccord (6a) monté sur un maître-cylindre (4),
un corps tubulaire de connexion d'un tuyau (6b, 6c) en forme de L dépassant du bord du corps de raccord (6a) et auquel est connecté un tuyau (7, 8) connecté au réservoir (5), et
un segment de guidage de branche de transport (6f) constituant un segment anti-entrave qui est monté sur le corps du raccord (6a) et empêche le contact d'un gabarit de transport (18) avec le corps tubulaire de connexion d'un tuyau (6b, 6c) lorsque le corps du raccord (6a) est porté par le gabarit de transport (18), le segment de guidage de branche de transport (6f) situé sur le côté sur lequel le corps tubulaire de connexion d'un tuyau (6b, 6c) dépasse étant subdivisé et ne dépassant que sur le bord d'un grand côté (6a2) du corps du raccord (6a) à l'exclusion de zones (6j, 6k), les zones (6j, 6k) comprenant le côté sur lequel le corps tubulaire de connexion d'un tuyau (6b, 6c) dépasse.

2. Raccord de connexion à un réservoir (6) conforme à la revendication 1, dans lequel le corps de raccord (6a) a une forme rectangulaire ou essentiellement rectangulaire,
le corps tubulaire de connexion d'un tuyau (6b, 6c) s'étend à partir de la partie supérieure du corps du raccord (6a) et dépassé vers l'extérieur à partir du bord du grand côté sur l'un des côtés du corps du raccord (6a), et
le segment anti-entrave est monté le long du bord du grand côté, sur un côté, et correspond au segment de guidage de branche de transport (6f, 6g) qui guide la branche de transport (18b, 18c) du gabarit de transport (18).

3. Raccord de connexion à un réservoir (6) conforme à la revendication 2, dans lequel le segment de guidage de branche de transport (6f, 6g) est situé le long du bord du grand côté, du côté du corps du raccord (6a) sur lequel le corps tubulaire de connexion d'un tuyau (6b, 6c) dépasse, et comprend un premier segment de guidage de branche de transport (6f) qui guide la première branche de transport (18b) du gabarit de transport (18) et également un second segment de guidage de branche de transport (6g) qui guide la seconde branche de transport (18c) du gabarit de transport (18), situé le long du bord du grand côté du corps du raccord (6a) sur lequel le corps tubulaire de connexion d'un tuyau (6b, 6c) ne dépasse pas, la première branche de transport (18b) comporte une première surface d'appui (18b₁) formée par une surface en biais, et, la seconde branche de transport (18c) comporte également une seconde surface d'appui (18c₁) formée par une surface en biais, les surfaces en biais de la première surface d'appui et de la seconde surface d'appui (18b₁, 18c₁) définissent conjointement essentiellement la forme d'un V, le premier segment de guidage de branche de transport (6f) a une première surface appuyée (6f₂) inclinée pour venir en contact avec la première surface d'appui (18b₁) et, le second segment de guidage de branche de transport (6g) a également une seconde surface appuyée (6g₂) inclinée pour venir en contact avec la seconde surface d'appui (18c₁), et les surfaces en biais de la première surface appuyée et de la seconde surface appuyée (6f₂, 6g₂) définissent conjointement une forme essentiellement la forme d'un V.

4. Raccord de connexion à un réservoir (6) conforme à la revendication 3, dans lequel le premier segment de guidage de branche de transport et le second segment de guidage de branche de transport (6f, 6g) dépassent de la partie supérieure du corps du raccord (6a) et sont subdivisés le long du bord de l'autre grand côté que celui de la zone dans laquelle le corps tubulaire de connexion d'un tuyau (6b, 6c) dépasse.

5. Maître-cylindre (4) comprenant:
un corps de cylindre,
un piston (4a, 4c) pouvant être introduit dans le corps de cylindre dans un état étanche aux liquides et de façon à pouvoir coulisser pour former une chambre hydraulique (4b, 4d) et générer une pression hydraulique dans la chambre hydraulique (4b, 4d) en cours de fonctionnement,
un perçage d'alimentation en fluide hydraulique (4f, 4g) qui est situé sur le corps de cylindre et est normalement relié à la chambre hydraulique (4b, 4d), et
un raccord de connexion à un réservoir (6) qui est monté sur le perçage d'alimentation en fluide hydraulique (4f, 4g) et qui fournit le fluide hydraulique renfermé dans le réservoir (5) dans le perçage d'alimentation en fluide hydraulique (4f, 4g),
**caractérisé en ce que** le raccord de connexion au réservoir (6) est un raccord de connexion à un réservoir (6) conforme à l'une quelconque des revendications 1 à 4.

6. Dispositif de freinage (1) comprenant au moins:
un réservoir (5) qui accumule un fluide hydraulique,
un maître-cylindre (4) comprenant un raccord de connexion au réservoir (6) relié au réservoir (5) par l'intermédiaire d'un tuyau (7, 8) et qui fournit le fluide hydraulique renfermé dans le réservoir (5), par l'intermédiaire d'un tuyau (7, 8) et du raccord de connexion au réservoir (6), et simultanément, génère une pression de freinage lors du fonctionnement, et
un cylindre de freinage (9, 10) qui travaille sous la pression hydraulique provenant du maître-cylindre (4),
**caractérisé en ce que** le maître-cylindre (4) est un maître-cylindre (4) conforme à la revendication 5.
